# EUROPEAN PATENT SPECIFICATION

(11) **EP 4 206 280 B1**
(45) Date of publication and mention of the grant of the patent: **29.10.2025**
(21) Application number: 21862092.0
(22) Date of filing: 26.08.2021
(51) Int. Cl.: C08L 35/04, C08L 51/04, C08L 33/12

(54) **THERMOPLASTIC RESIN COMPOSITION AND MOLDED ARTICLE PREPARED THEREFORM**
THERMOPLASTISCHE HARZZUSAMMENSETZUNG UND DARAUS HERGESTELLTER FORMKÖRPER
COMPOSITION DE RÉSINE THERMOPLASTIQUE ET ARTICLE MOULÉ PRÉPARÉ À PARTIR DE CELLE-CI

(30) Priority: 31.08.2020 KR 20200110621
(43) Date of publication of application: 05.07.2023
(73) Proprietor: Lotte Chemical Corporation, Seoul, 05551 (KR)
(72) Inventor: KIM, In-Chol, Uiwang-si, Gyeonggi-do 16073 (KR); SHIN, Hyeongseob, Uiwang-si, Gyeonggi-do 16073 (KR); KWON, Keehae, Uiwang-si, Gyeonggi-do 16073 (KR); HONG, Jaekeun, Uiwang-si, Gyeonggi-do 16073 (KR)
(74) Representative: Germain Maureau
(86) International application number: PCT/KR2021/011441
(87) International publication number: WO 2022/045795

(56) References cited:
- EP-B1- 0 794 201
- KR-A- 20150 114 239
- KR-A- 20190 082 087
- KR-B1- 101 123 007
- KR-B1- 101 770 454

## Description

### [Technical Field]

A thermoplastic resin composition and a molded article prepared therefrom are disclosed.

### [Background Art]

Recently, a thermoplastic resin variously applied to electric/electronic products, automobiles, construction materials, leisure goods, and the like has been rapidly replacing a conventional glass or metal area. Accordingly, demand for a thermoplastic resin capable of realizing excellent impact resistance, weather resistance, moldability, and high-quality appearance is being increased.

In general, when an acrylonitrile-butadiene-styrene copolymer resin (hereinafter, ABS resin) is used as the thermoplastic resin, since the ABS resin includes a chemically unstable double bond in a rubber component, and the rubber component may be easily aged by ultraviolet (UV), weather resistance and light resistance are not sufficient. Accordingly, when left outside for a long time, the acrylonitrile-butadiene-styrene copolymer resin is discolored and exhibits large property deterioration, as time passes and accordingly, is not suitable for outdoor use exposed to sunlight.

On the contrary, an acrylonitrile-styrene-acrylate copolymer resin (hereinafter, ASA resin) uses a chemically stable acrylate-based rubbery polymer instead of the butadiene-based rubbery polymer containing chemically unstable double bonds as the rubber component and thus is known to solve the discoloring and property deterioration problems of the ABS resin according to aging of the rubber component due to ultraviolet (UV). In addition, the ASA resin has excellent moldability, chemical resistance, and thermal stability and the like as well as weather resistance and light resistance.

Recently, requirements for a non-painted thermoplastic resin usable without a painting process have been increased according to an environmentally-friendly trend. The non-painted thermoplastic resin should have excellent scratch resistance, colorability, impact resistance, weather resistance, and the like, for a non-painted molded article is used as it is, and as the level of property requirements has recently been increased, attempts to apply an ASA/PMMA alloy resin in which an ASA resin is mixed with a polymethyl methacrylate resin (hereinafter referred to as a PMMA resin) are increasingly being made.

However, the ASA/PMMA alloy resins lack impact resistance and heat resistance, compared with the ASA resins, and in particular, when general heat resistance enhancers are used to compensate for the heat resistance, the colorability of the ASA/PMMA alloy resin may be greatly reduced due to the low compatibility with ASA and/or PMMA.

Therefore, there is a need for research on ASA/PMMA alloy resins having excellent impact resistance, heat resistance and colorability.

KR10-2015-0114239A discloses blends comprising ASA and PMMA. KR10-1123007B1 discloses compositions comprising N-cyclohexylmaleimide-alkyl(meth)acrylate copolymer.

### [Disclosure]

### [Description of the Drawings]

### [Technical Problem]

A thermoplastic resin composition capable of implementing an ASA/PMMA alloy resin having excellent impact resistance, heat resistance, and colorability is provided.

Another embodiment provides a molded article prepared from the thermoplastic resin composition.

### [Technical Solution]

According to an embodiment, a thermoplastic resin composition includes (A) 10 to 40 wt% of an acrylate-based graft copolymer that includes a core including an acrylate-based rubbery polymer, and a shell formed by graft-polymerization of a monomer to the core, the monomer including an alkyl (meth)acrylate, an aromatic vinyl compound, a vinyl cyanide compound, or a combination thereof; (B) 10 to 40 wt% of a polyalkyl (meth)acrylate resin; and (C) 30 to 70 wt% of an N-cyclohexyl maleimide-alkyl (meth)acrylate copolymer.

The acrylate-based rubbery polymer may have an average particle diameter of 100 to 400 nm and may include a cross-linked polymer of alkyl acrylate including methyl acrylate, ethyl acrylate, butyl acrylate, 2-ethylhexyl acrylate, hexyl acrylate, or a combination thereof, a cross-linked copolymer of the alkyl acrylate and an aromatic vinyl compound, a cross-linked copolymer of the alkyl acrylate and the silicone compound or a combination thereof.

30 to 60 wt% of the acrylate-based rubbery polymer may be included based on 100 wt% of the (A) acrylate graft copolymer.

In the acrylate-based rubbery polymer, the core may include a cross-linked copolymer of an alkyl acrylate-aromatic vinyl compound, and the shell may be formed by graft-polymerization of a monomer mixture including an alkyl (meth)acrylate to the core.

The core may include a cross-linked copolymer of an alkyl acrylate-silicone compound, and the shell may be formed by graft-polymerization of a monomer mixture including an aromatic vinyl compound and a vinyl cyanide compound to the core.

The shell may be a copolymer of a monomer mixture including the aromatic vinyl compound and the vinyl cyanide compound in a weight ratio of 6:4 to 8:2.

The (B) polyalkyl (meth)acrylate resin may have a weight average molecular weight of 50,000 to 200,000 g/mol, and may be a polymer of a monomer including methyl (meth)acrylate, ethyl (meth)acrylate, butyl (meth)acrylate, glycidyl (meth)acrylate, 2-hydroxyethyl (meth)acrylate, cyclohexyl (meth)acrylate, or a combination thereof.

The (C) N-cyclohexyl maleimide-alkyl (meth)acrylate copolymer may have a glass transition temperature of 120 to 140°C and a refractive index of 1.480 to 1.500.

The (C) N-cyclohexyl maleimide-alkyl (meth)acrylate copolymer may have a weight average molecular weight of 50,000 to 300,000 g/mol.

The thermoplastic resin composition may further include (D) an alkyl (meth)acrylate-aromatic vinyl compound-vinyl cyanide compound copolymer in an amount of greater than 0 wt% and less than or equal to 10 wt%.

The thermoplastic resin composition may further include at least one additive selected from a flame retardant, a nucleating agent, a coupling agent, filler, a plasticizer, a lubricant, an antibacterial agent, a release agent, a heat stabilizer, an antioxidant, an inorganic material additive, an ultraviolet (UV) stabilizer, an antistatic agent, a pigment, and a dye.

On the other hand, according to another embodiment, a molded article prepared from the aforementioned thermoplastic resin composition is provided.

The molded article may have a notched Izod impact strength of a 1/4 inch-thick specimen measured according to ASTM D256 of greater than or equal to 3 kgf·cm/cm.

The molded article may have a Vicat softening temperature measured according to ASTM D1525 of greater than or equal to 102°C.

The molded article may have a lightness value (L*) measured according to ASTM E308 in a specular component excluded (SCE) method with respect to a black molded article of less than or equal to 1.

### [Advantageous Effects]

A thermoplastic resin composition having improved impact resistance, heat resistance, and colorability, and a molded article prepared therefrom may be provided.

### [Mode for Invention]

Hereinafter, embodiments of the present invention are described in detail. However, these embodiments are exemplary, the present invention is not limited thereto and the present invention is defined by the scope of claims.

In the present specification, (meth)acrylate means acrylate and/or methacrylate.

In the present specification, unless otherwise described, the average particle diameter refers to a Z-average particle diameter measured using a dynamic light scattering analyzer.

In the present specification, unless otherwise mentioned, the weight average molecular weight is measured by dissolving a powder sample in tetrahydrofuran (THF) and then performing gel permeation chromatography (GPC) with a 1200 series made by Agilent Technologies Inc.

An embodiment provides a thermoplastic resin composition having improved impact resistance, heat resistance, and colorability.

The thermoplastic resin composition may include (A) 10 to 40 wt% of an acrylate-based graft copolymer that comprises a core including an acrylate-based rubbery polymer, and a shell formed by graft-polymerization of a monomer to the core, the monomer including an alkyl (meth)acrylate, an aromatic vinyl compound, a vinyl cyanide compound, or a combination thereof; (B) 10 to 40 wt% of a polyalkyl (meth)acrylate resin; and (C) 30 to 70 wt% of an N-cyclohexyl maleimide-alkyl (meth)acrylate copolymer.

Hereinafter, each component included in the thermoplastic resin composition will be described in detail.

### (A) Acrylate-based Graft Copolymer

In an embodiment, the acrylate-based graft copolymer may be prepared by graft-polymerization of a monomer and/or a monomer mixture including a predetermined compound to a core including an acrylate-based rubbery polymer to form a shell.

The polymerization method may use a conventional preparing method, for example, emulsion polymerization, suspension polymerization, solution polymerization, bulk polymerization, and the like. As a non-limiting example, it may be prepared by a method of preparing a core formed of one or more layers of an acrylate-based rubbery polymer, and performing graft-polymerization of the aforementioned monomer and/or monomer mixture to the core to form a shell of one or more layers.

The acrylate-based rubbery polymer may be a cross-linked polymer prepared by using alkyl acrylate as a main monomer. Examples of the alkyl acrylate may include methyl acrylate, ethyl acrylate, butyl acrylate, 2-ethylhexyl acrylate, hexyl acrylate, or a combination thereof.

The alkyl acrylate monomer may be copolymerized with one or more radically polymerizable other monomers, and the other radically polymerizable monomer may be, for example, an aromatic vinyl compound or a silicone compound. In the case of copolymerization, an amount of the one or more radically polymerizable other monomers may be 1 to 30 wt%, and specifically 1 to 20 wt%, based on the total weight of the acrylate-based rubbery polymer.

In an embodiment, in the acrylate-based graft copolymer, an average particle diameter of the acrylate-based rubbery polymer may be, for example, 100 to 400 nm.

When the average particle diameter of the acrylate-based rubbery polymer is within the above range, mechanical properties such as impact resistance and tensile strength and appearance of the thermoplastic resin composition including the same may be improved.

In an embodiment, examples of the monomer and/or monomer mixture including the predetermined compound for forming the shell may include alkyl (meth)acrylate, an aromatic vinyl compound, a vinyl cyanide compound, or a combination thereof.

Examples of the alkyl (meth)acrylate for constituting the shell may include methyl (meth)acrylate, ethyl (meth)acrylate, butyl (meth)acrylate, glycidyl (meth)acrylate, 2-hydroxyethyl (meth)acrylate, cyclohexyl (meth)acrylate, or a combination thereof, but are not limited thereto.

Examples of the aromatic vinyl compound for constituting the shell may include styrene, α-methylstyrene, p-methylstyrene, p-t-butylstyrene, 2,4-dimethylstyrene, chlorostyrene, vinyltoluene, vinylnaphthalene, or a combination thereof, but are not limited thereto.

The vinyl cyanide compound for constituting the shell may include acrylonitrile, methacrylonitrile, fumaronitrile, or a combination thereof, but are not limited thereto.

In an embodiment, based on 100 wt% of the acrylate-based graft copolymer, an amount of the acrylate-based rubbery polymer may be 30 to 60 wt%, for example 40 to 60 wt%, or for example 50 to 60 wt%.

In an embodiment, the core may include an alkyl acrylate-aromatic vinyl compound cross-linked copolymer, and the shell may be formed by graft-polymerization of the alkyl (meth)acrylate to the core. Specifically, the acrylate-based graft copolymer may be one in which a methyl methacrylate is graft-polymerized to a core made of a butyl acrylate-styrene cross-linked copolymer to form a shell.

In an embodiment, the core may include an alkyl acrylate-silicone compound cross-linked polymer, and the shell may be formed by graft-polymerization of a monomer mixture including the aromatic vinyl compound and the vinyl cyanide compound to the core. In this case, the shell may be a copolymer of a monomer mixture including an aromatic vinyl compound and a vinyl cyanide compound in a weight ratio of 6 : 4 to 8 : 2, for example 6 : 4 to 7 : 3. Specifically, the acrylate-based graft copolymer may be obtained by graft-polymerization of a mixture of styrene and acrylonitrile monomers to a core made of a butyl acrylate-silicone cross-linked polymer to form a shell.

The acrylate-based graft copolymer may be included in an amount of greater than or equal to 10 wt%, for example greater than or equal to 15 wt%, and for example less than or equal to 40 wt%, for example less than or equal to 35 wt%, for example 10 to 40 wt%, or for example 15 to 35 wt% based on 100 wt% of the components (A) to (C).

When the acrylate-based graft copolymer is less than 10 wt%, an impact resistance of the thermoplastic resin composition including the same may be reduced, and when it exceeds 40 wt%, mechanical strength and colorability of the thermoplastic resin composition including the same may be reduced.

### (B) Polyalkyl (meth)acrylate Resin

In an embodiment, the polyalkyl (meth)acrylate resin may improve colorability and scratch resistance of the thermoplastic resin composition.

The polyalkyl (meth)acrylate resin may be obtained by polymerizing a raw material monomer including an alkyl (meth)acrylate by known polymerization methods such as suspension polymerization, bulk polymerization, and emulsion polymerization.

The alkyl (meth)acrylate may have a C1 to C10 alkyl group. Examples of the alkyl (meth)acrylate may include methyl (meth)acrylate, ethyl (meth)acrylate, butyl (meth)acrylate, glycidyl (meth)acrylate, 2-hydroxyethyl (meth)acrylate, cyclohexyl (meth)acrylate, or a combination thereof.

The component derived from the alkyl (meth)acrylate may be included in at least 50 wt% and desirably 80 to 100 wt% based on 100 wt% of the total polyalkyl (meth)acrylate resin.

In an embodiment, the polyalkyl (meth)acrylate resin may include a polymethyl methacrylate resin. The polymethyl methacrylate resin may be a copolymer of methyl methacrylate and methyl acrylate. In this case, the polymethyl methacrylate resin may be a copolymer of a monomer mixture including 80 to 99 wt% of the methyl methacrylate and 1 to 20 wt% of the methyl acrylate.

The polyalkyl (meth)acrylate resin may have a weight average molecular weight of 50,000 to 200,000 g/mol, and for example 50,000 to 150,000 g/mol. When the weight average molecular weight of the polyalkyl (meth)acrylate resin is within the above range, scratch resistance, processability, etc. may be excellently maintained.

In an embodiment, a glass transition temperature of the polyalkyl (meth)acrylate resin may be 100 to 150°C, and specifically 110 to 130°C.

In an embodiment, a refractive index of the polyalkyl (meth)acrylate resin may be 1.480 to 1.495, and specifically 1.485 to 1.490. When the above range is satisfied, a difference in refractive index between a continuous phase (matrix) and a dispersed phase (domain) may be minimized, and thus the thermoplastic resin composition may exhibit excellent colorability due to excellent transparency. The refractive index is a value measured using a spectroscopic ellipsometer, which is a refractive index measuring instrument of J.A. Woollam.

In an embodiment, the polyalkyl (meth)acrylate resin may be included in an amount of greater than or equal to 10 wt%, for example greater than or equal to 15 wt%, or for example greater than or equal to 20 wt% and for example less than or equal to 40 wt%, for example less than or equal to 35 wt%, or for example less than or equal to 30 wt%, for example 10 to 40 wt%, for example 15 to 35 wt%, or for example 20 to 30 wt% based on 100 wt% of the total amount of the components (A) to (C).

When the content is less than 10 wt%, scratch resistance, colorability, weather resistance, and appearance characteristics may be deteriorated, and when is more than 40 wt%, impact resistance and processability may be reduced.

### (C) N-cyclohexyl maleimide-alkyl (meth)acrylate Copolymer

In an embodiment, the N-cyclohexyl maleimide-alkyl (meth)acrylate copolymer may improve heat resistance of the thermoplastic resin composition. In addition, the N-cyclohexyl maleimide-alkyl (meth)acrylate copolymer exhibits excellent compatibility with the polyalkyl (meth)acrylate resin due to the component derived from the alkyl (meth)acrylate, and thus the thermoplastic resin composition including the same may exhibit improved impact resistance.

In an embodiment, the N-cyclohexyl maleimide-alkyl (meth)acrylate copolymer may be a terpolymer of N-cyclohexyl maleimide-alkyl (meth)acrylate-aromatic vinyl compound.

The N-cyclohexyl maleimide-alkyl (meth)acrylate copolymer may be a copolymer of a monomer mixture including 10 to 40 wt% of N-cyclohexyl maleimide and 60 to 90 wt% of alkyl (meth)acrylate. When each of the components is included in the above ranges, a thermoplastic resin composition including the same may exhibit excellent impact resistance and heat resistance.

In an embodiment, examples of the alkyl (meth)acrylate may include methyl (meth)acrylate, ethyl (meth)acrylate, butyl (meth)acrylate, or a combination thereof, but are not limited thereto.

The N-cyclohexyl maleimide-alkyl (meth)acrylate copolymer may have a weight average molecular weight of 50,000 to 300,000 g/mol, for example, 50,000 to 200,000 g/mol. When the above range is satisfied, a thermoplastic resin composition including the same may exhibit excellent heat resistance and impact resistance.

The N-cyclohexyl maleimide-alkyl (meth)acrylate copolymer may have a glass transition temperature of 120 to 140°C, for example, 130 to 140°C.

The N-cyclohexyl maleimide-alkyl (meth)acrylate copolymer may have a refractive index of 1.480 to 1.500, for example, 1.490 to 1.500.

The N-cyclohexyl maleimide-alkyl (meth)acrylate copolymer may be included in an amount of 30 to 70 wt%, for example 35 to 65 wt%, for example 40 to 60 wt%, for example 45 to 55 wt%, based on 100 wt% of the total components (A) to (C). When the content of the N-cyclohexyl maleimide-alkyl (meth)acrylate copolymer satisfies the above range, improved heat resistance may be secured without degrading the colorability of the thermoplastic resin composition according to an embodiment.

### (D) Alkyl (meth)acrylate-aromatic vinyl compound-vinyl cyanide compound Copolymer

The thermoplastic resin composition according to an embodiment may further include an alkyl (meth)acrylate-aromatic vinyl compound-vinyl cyanide compound copolymer in addition to the aforementioned components (A), (B), and (C).

The alkyl (meth)acrylate-aromatic vinyl compound-vinyl cyanide compound copolymer may be a copolymer of a monomer mixture including an alkyl (meth)acrylate, an aromatic vinyl compound, and a vinyl cyanide compound.

In an embodiment, examples of the alkyl (meth)acrylate may include methyl (meth)acrylate, ethyl (meth)acrylate, butyl (meth)acrylate, or a combination thereof, but are limited thereto not.

In an embodiment, examples of the aromatic vinyl compound may include styrene, α-methylstyrene, p-methylstyrene, p-t-butylstyrene, 2,4-dimethylstyrene, chlorostyrene, vinyltoluene, vinylnaphthalene, or a combination thereof, but are not limited thereto.

In an embodiment, examples of the vinyl cyanide compound may include acrylonitrile, methacrylonitrile, fumaronitrile, or a combination thereof, but are not limited thereto.

Specifically, the alkyl (meth)acrylate-aromatic vinyl compound-vinyl cyanide compound copolymer may be a terpolymer of methyl methacrylate-styrene-acrylonitrile.

The methyl methacrylate-styrene-acrylonitrile copolymer may be a copolymer of a monomer mixture including 60 to 80 wt% of methyl methacrylate, 10 to 30 wt% of styrene, and greater than 0 wt% and less than or equal to 10 wt% of acrylonitrile.

The alkyl (meth)acrylate-aromatic vinyl compound-vinyl cyanide compound copolymer may have a weight average molecular weight of 50,000 to 200,000 g/mol, for example, 60,000 to 200,000 g/mol, for example 70,000 to 180,000 g/mol, for example 80,000 to 160,000 g/mol, for example 80,000 to 140,000 g/mol, for example 80,000 to 120,000 g/mol, for example 90,000 to 120,000 g/mol.

When the weight average molecular weight of the alkyl (meth)acrylate-aromatic vinyl compound-vinyl cyanide compound copolymer is within the above range, a morphology between each component constituting the thermoplastic resin composition may be stably maintained without reducing a moldability of the thermoplastic resin composition in the shear rate region during injection molding.

The alkyl (meth)acrylate-aromatic vinyl compound-vinyl cyanide compound copolymer may be omitted in consideration of the balance of physical properties with other components, but when included, it may be included in an amount of greater than 0 wt%, for example greater than or equal to 1 wt%, for example greater than or equal to 2 wt%, for example greater than or equal to 3 wt%, for example greater than or equal to 4 wt%, for example greater than or equal to 5 wt%, and for example less than or equal to 10 wt%, for example less than or equal to 9 wt%, for example less than or equal to 8 wt%, for example less than or equal to 7 wt%, for example less than or equal to 6 wt%, for example greater than 0 wt% and less than or equal to 10 wt%, for example 2 to 8 wt%, for example 3 to 7 wt% based on 100 wt% of the total of the components (A) to (D).

When the alkyl (meth)acrylate-aromatic vinyl compound-vinyl cyanide compound copolymer satisfies the aforementioned range, each component constituting the thermoplastic resin composition, for example, improves compatibility with the acrylate-based graft copolymer, thereby exhibiting improved balance of physical properties.

### (E) Other Additives

The thermoplastic resin composition according to an embodiment may further include at least one type of additive which is required for a final use of the thermoplastic resin composition or property balance under a condition of excellently maintaining other properties during processing and use in addition to the components (A) to (D).

Specifically, the additive may be a flame retardant, a nucleating agent, a coupling agent, filler, a plasticizer, a lubricant, an antibacterial agent, a release agent, a heat stabilizer, an antioxidant, an inorganic material additive, an ultraviolet (UV) stabilizer, an antistatic agent, a pigment, a dye, and the like, which may be used alone or in a combination of two or more.

These additives may be appropriately included, unless properties of the thermoplastic resin composition are deteriorated, and specifically, included in an amount of less than or equal to about 20 parts by weight based on 100 parts by weight of the sum of components (A) to (D), but is not limited thereto.

On the other hand, the thermoplastic resin composition of an embodiment may be mixed with other resins or other rubber components.

On the other hand, another embodiment provides a molded article prepared from the thermoplastic resin composition according to an embodiment. The molded article may be prepared in various methods publicly known in the related art, for example, a method of injection molding, extrusion molding, and the like by using the thermoplastic resin composition.

In an embodiment, the molded article may have a notched Izod impact strength of a 1/4 inch-thick specimen measured according to ASTM D256 of greater than or equal to 3 kgf·cm/cm, or for example greater than or equal to 3.2 kgf·cm/cm.

In an embodiment, the molded article may have a Vicat softening temperature measured according to ASTM D1525 of greater than or equal to 102°C, or for example greater than or equal to 103°C.

In an embodiment, the molded article may have a lightness value (L*) measured according to ASTM E308 in a specular component excluded (SCE) method with respect to a black molded article of less than or equal to 1, for example less than or equal to 0.9, for example less than or equal to 0.8, for example less than or equal to 0.7, or for example less than or equal to 0.6. The lightness value is a value in case that a predetermined amount, for example, 0.5 to 1 part by weight based on 100 parts by weight of the sum of components (A) to (D) of a black dye and/or a black pigment is added to the aforementioned thermoplastic resin composition to prepare a molded article, and the lower the lightness value, the better the blackness (colorability).

As such, the molded article prepared from the thermoplastic resin composition according to an embodiment exhibits excellent impact resistance, heat resistance, and colorability, the molded article may be advantageously used for various electric and electronic parts, construction materials, leisure products, automobile parts, etc. which are used outdoors. Particularly, the molded article may be used as an exterior part for automobiles capable of non-painting. However, the use of the molded article is not limited thereto.

Hereinafter, the present invention is illustrated in more detail with reference to examples. These examples, however, are not in any sense to be interpreted as limiting the scope of the invention.

### Examples 1 to 5 and Comparative Examples 1 to 6

The components shown in Tables 1, 0.5 parts by weight of a black dye for easy evaluation of colorability, and 0.5 parts by weight of other additives such as an antioxidant, lubricant, and the like were mixed by using a common mixer and then, extruded at about 250°C by using a twin-screw extruder (L/D = 29, Φ = 45 mm) to prepare pellet-shaped thermoplastic resin compositions.

The obtained pellets were dried in an about 80°C dehumidifying dryer for about 4 hours before injection molding and then, injection-molded by using a 6 oz injection molding machine set at a cylinder temperature of about 250°C and at a mold temperature of about 60°C to prepare specimens for measuring physical properties and specimens for measuring colorability. The measured properties are shown in Table 2.

**(Table 1)**

| Components | | Examples | | | | | Comparative Examples | | | | | |
|---|---|---|---|---|---|---|---|---|---|---|---|---|
| | | 1 | 2 | 3 | 4 | 5 | 1 | 2 | 3 | 4 | 5 | 6 |
| (A) | (A-1) | 20 | 20 | 40 | - | 30 | 50 | 10 | 40 | 40 | 40 | - |
| | (A-2) | - | - | - | 40 | - | - | - | - | - | - | 40 |
| (B) | | 40 | 10 | 10 | 10 | 10 | 10 | 10 | 10 | 10 | 60 | 60 |
| (C) | | 40 | 70 | 50 | 50 | 50 | 40 | 80 | - | - | - | - |
| (C') | | - | - | - | - | - | - | - | 50 | - | - | - |
| (C") | | - | - | - | - | - | - | - | - | 50 | - | - |
| (D) | | - | - | - | - | 10 | - | - | - | - | - | - |

In Table 1, all components are expressed in wt%, and black dye and other additives such as an antioxidant and a lubricant commonly used are not indicated.

### (A-1) Acrylate-based Graft Copolymer

An acrylate-styrene-methyl methacrylate graft copolymer (Kaneka Corporation) including about 60 wt% of a butyl acrylate-styrene cross-linked copolymer core having an average particle diameter of about 250 nm, wherein methyl methacrylate was graft-polymerized on the core to form a shell was used.

### (A-2) Acrylate-based Graft Copolymer

An acrylate-silicone-styrene-acrylonitrile graft copolymer (Mitsubishi Chemical Co.) including about 60 wt% of an acrylate-silicone cross-linked copolymer core having an average particle diameter of about 150 nm, wherein styrene-acrylonitrile was graft-polymerized on the core to form a shell was used.

### (B) Polyalkyl (meth)acrylate Resin

A polymethyl methacrylate resin (Lotte Chemical Corp.) having a weight average molecular weight of about 100,000 g/mol was used.

### (C) N-cyclohexyl maleimide-alkyl (meth)acrylate Copolymer

An N-cyclohexyl maleimide-methyl methacrylate copolymer (Asahi Chemicals Co.) having a refractive index of about 1.49 and a glass transition temperature (Tg) of about 130°C was used.

### (C') Styrene-methyl methacrylate-maleic anhydride Copolymer

A styrene-methyl methacrylate-maleic anhydride copolymer having a refractive index of about 1.57 and obtained by copolymerization of a monomer mixture including about 70 wt% of styrene, about 8 wt% of methyl methacrylate, and about 22 wt% of maleic anhydride (Denka Company) was used.

### (C") N-phenyl maleimide-methyl methacrylate-styrene Copolymer

An N-phenyl maleimide-methyl methacrylate-styrene copolymer (Nippon shokubai Co., Ltd.) having a refractive index of about 1.52, a weight average molecular weight of about 200,000 g/mol, and a glass transition temperature (Tg) of about 140°C was used.

### (D) Alkyl (meth)acrylate-aromatic vinyl compound-vinyl cyanide compound Copolymer

A copolymer consisting of 21.15% of styrene, 73.85% of methyl methacrylate, and 5% of acrylonitrile.

### Evaluations

The impact resistance, heat resistance, and colorability of the specimens for evaluating properties and colorability according to Examples 1 to 5 and Comparative Examples 1 to 6 were measured by the following evaluation method, and are shown in Table 2.

### 1. Impact Resistance (unit: kgf·cm/cm)

Notched Izod impact strength was measured according to ASTM D256 standard with respect to notched 1/4 inch-thick specimens.

### 2. Heat Resistance (unit: °C)

Vicat softening temperature (VST) was measured according to ASTM D1525.

### 3. Colorability

Using a Konica-Minolta CM-3700d colorimeter, lightness (L*) values were measured with respect to specimens for measuring colorability of width x length x thickness of 90 mm x 50 mm x 2.5 mm in a specular component excluded (SCE) method according to ASTM E308. The lower the lightness, the better the blackness, and thus it was evaluated that the colorability were excellent.

**(Table 2)**

| Components | Examples | | | | | Comparative Examples | | | | | |
|---|---|---|---|---|---|---|---|---|---|---|---|
| | 1 | 2 | 3 | 4 | 5 | 1 | 2 | 3 | 4 | 5 | 6 |
| Izod Impact strength | 4.1 | 4.3 | 6.5 | 8.5 | 5.2 | 7.0 | 1.8 | 4.3 | 4.1 | 6.8 | 11.0 |
| VST | 105 | 109 | 104 | 104 | 106 | 100 | 111 | 112 | 112 | 95 | 94 |
| L* | 0.4 | 0.4 | 0.6 | 1.0 | 0.7 | 1.1 | 0.4 | 3.2 | 3.0 | 0.5 | 1.5 |

From the results of Tables 1 and 2, the thermoplastic resin composition including the acrylate-based graft copolymer, polyalkyl (meth)acrylate resin, and N-cyclohexyl maleimide-alkyl (meth)acrylate copolymer in the above-described range and a molded article prepared therefrom exhibit excellent impact resistance, heat resistance, and colorability.

## Claims

1. A thermoplastic resin composition, comprising
(A) 10 to 40 wt% of an acrylate-based graft copolymer that includes a core including an acrylate-based rubbery polymer, and a shell formed by graft-polymerization of a monomer to the core, the monomer including an alkyl (meth)acrylate, an aromatic vinyl compound, a vinyl cyanide compound, or a combination thereof;
(B) 10 to 40 wt% of a polyalkyl (meth)acrylate resin; and
(C) 30 to 70 wt% N-cyclohexyl maleimide-alkyl (meth)acrylate copolymer.

2. The thermoplastic resin composition of claim 1, wherein
the acrylate-based rubbery polymer has an average particle diameter of 100 to 400 nm, wherein the average particle diameter refers to a Z-average particle diameter which is measured using a dynamic light scattering analyzer, and
the acrylate-based rubbery polymer includes a cross-linked polymer of alkyl acrylate including methyl acrylate, ethyl acrylate, butyl acrylate, 2-ethylhexyl acrylate, hexyl acrylate, or a combination thereof, a cross-linked copolymer of the alkyl acrylate and an aromatic vinyl compound, a cross-linked copolymer of the alkyl acrylate and the silicone compound or a combination thereof.

3. The thermoplastic resin composition of claim 1 or claim 2, wherein
30 to 60 wt% of the acrylate-based rubbery polymer is included based on 100 wt% of the (A) acrylate-based graft copolymer.

4. The thermoplastic resin composition of any one of claim 1 to claim 3, wherein
the core includes a cross-linked copolymer of an alkyl acrylate-aromatic vinyl compound, and
the shell is formed by graft-polymerization of a monomer mixture including an alkyl (meth)acrylate to the core.

5. The thermoplastic resin composition of any one of claim 1 to claim 4, wherein
the core includes a cross-linked copolymer of an alkyl acrylate-silicone compound, and
the shell is formed by graft-polymerization of a monomer mixture including an aromatic vinyl compound and a vinyl cyanide compound to the core.

6. The thermoplastic resin composition of claim 5, wherein
the shell is a copolymer of a monomer mixture including the aromatic vinyl compound and the vinyl cyanide compound in a weight ratio of 6:4 to 8:2.

7. The thermoplastic resin composition of any one of claim 1 to claim 6, wherein
the (B) polyalkyl (meth)acrylate resin has a weight average molecular weight of 50,000 to 200,000 g/mol, wherein the weight average molecular weight is measured by dissolving a powder sample in tetrahydrofuran (THF) and then performing gel permeation chromatography (GPC), and
the (B) polyalkyl (meth)acrylate resin is a polymer of a monomer including methyl (meth)acrylate, ethyl (meth)acrylate, butyl (meth)acrylate, glycidyl (meth)acrylate, 2-hydroxyethyl (meth)acrylate, cyclohexyl (meth)acrylate, or a combination thereof.

8. The thermoplastic resin composition of any one of claim 1 to claim 7, wherein
the (C) N-cyclohexyl maleimide-alkyl (meth)acrylate copolymer has a glass transition temperature of 120 to 140°C and a refractive index of 1.480 to 1.500, wherein the refractive index is a value measured using a spectroscopic ellipsometer.

9. The thermoplastic resin composition of any one of claim 1 to claim 8, wherein
the (C) N-cyclohexyl maleimide-alkyl (meth)acrylate copolymer has a weight average molecular weight of 50,000 to 300,000 g/mol, wherein the weight average molecular weight is measured by dissolving a powder sample in tetrahydrofuran (THF) and then performing gel permeation chromatography (GPC).

10. The thermoplastic resin composition of any one of claim 1 to claim 9, wherein
(D) an alkyl (meth)acrylate-aromatic vinyl compound-vinyl cyanide compound copolymer is further included in an amount of greater than 0 wt% and less than or equal to 10 wt%.

11. The thermoplastic resin composition of any one of claim 1 to claim 10, wherein
at least one additive selected from a flame retardant, a nucleating agent, a coupling agent, filler, a plasticizer, a lubricant, an antibacterial agent, a release agent, a heat stabilizer, an antioxidant, an inorganic material additive, an ultraviolet (UV) stabilizer, an antistatic agent, a pigment, and a dye is further included.

12. A molded article prepared from the thermoplastic resin composition of any one of claim 1 to claim 11.

13. The molded article of claim 12, wherein the molded article has a notched Izod impact strength of a 1/4 inch-thick specimen measured according to ASTM D256 of greater than or equal to 3 kgf·cm/cm.

14. The molded article of claim 12 or claim 13, wherein
the molded article has a Vicat softening temperature measured according to ASTM D1525 of greater than or equal to 102°C.

15. The molded article of any one of claim 12 to claim 14, wherein
the molded article has a lightness value (L*) measured according to ASTM E308 in a specular component excluded (SCE) method with respect to a black molded article of less than or equal to 1.

## Patentansprüche

1. Thermoplastische Harzzusammensetzung, umfassend
(A) 10 bis 40 Gew.-% eines Transplantat-Copolymers auf Acrylatbasis, das einen Kern einschließlich eines gummiartigen Polymers auf Acrylatbasis und eine Schale enthält, die durch Transplantatpolymerisation eines Monomers mit dem Kern gebildet wird, wobei das Monomer ein Alkyl(meth)acrylat, eine aromatische Vinylverbindung, eine Vinylcyanidverbindung oder eine Kombination davon enthält;
(B) 10 bis 40 Gew.-% eines Polyalkyl(meth)acrylatharzes; und
(C) 30 bis 70 Gew.-% N-Cyclohexylmaleimid-Alkyl(meth)acrylat-Copolymer.

2. Thermoplastische Harzzusammensetzung nach Anspruch 1, wobei
das gummiartige Polymer auf Acrylatbasis einen durchschnittlichen Partikeldurchmesser von 100 bis 400 nm aufweist, wobei sich der durchschnittliche Partikeldurchmesser auf einen Z-durchschnittlichen Partikeldurchmesser bezieht, der mit einem dynamischen Lichtstreuanalysator gemessen wird, und
das gummiartige Polymer auf Acrylatbasis ein vernetztes Polymer aus Alkylacrylat einschließlich Methylacrylat, Ethylacrylat, Butylacrylat, 2-Ethylhexylacrylat, Hexylacrylat oder einer Kombination davon, ein vernetztes Copolymer des Alkylacrylats und einer aromatischen Vinylverbindung, ein vernetztes Copolymer des Alkylacrylats und der Silikonverbindung oder eine Kombination davon enthält.

3. Thermoplastische Harzzusammensetzung nach Anspruch 1 oder Anspruch 2, wobei
30 bis 60 Gew.-% des gummiartigen Polymers auf Acrylatbasis basierend auf 100 Gew.-% des (A) Transplantat-Copolymers auf Acrylatbasis enthalten sind.

4. Thermoplastische Harzzusammensetzung nach einem der Ansprüche 1 bis 3, wobei
der Kern ein vernetztes Copolymer einer Alkylacrylat-aromatischen Vinylverbindung enthält, und
die Schale durch Transplantatpolymerisation einer Monomermischung einschließlich eines Alkyl(meth)acrylats zum Kern gebildet wird.

5. Thermoplastische Harzzusammensetzung nach einem der Ansprüche 1 bis 4, wobei
der Kern ein vernetztes Copolymer einer Alkylacrylat-Silikon-Verbindung enthält, und
die Schale durch Transplantatpolymerisation einer Monomermischung einschließlich einer aromatischen Vinylverbindung und einer Vinylcyanidverbindung zum Kern gebildet wird.

6. Thermoplastische Harzzusammensetzung nach Anspruch 5, wobei
die Schale ein Copolymer einer Monomermischung einschließlich der aromatischen Vinylverbindung und der Vinylcyanidverbindung in einem Gewichtsverhältnis von 6:4 bis 8:2 ist.

7. Thermoplastische Harzzusammensetzung nach einem von Anspruch 1 bis Anspruch 6, wobei
das (B) Polyalkyl(meth)acrylatharz ein gewichtsdurchschnittliches Molekulargewicht von 50.000 bis 200.000 g/mol aufweist, wobei das gewichtsdurchschnittliche Molekulargewicht durch Auflösen einer Pulverprobe in Tetrahydrofuran (THF) und anschließende Durchführung einer Gelpermeationschromatographie (GPC) gemessen wird, und
das (B) Polyalkyl(meth)acrylatharz ein Polymer eines Monomers ist, das Methyl(meth)acrylat, Ethyl(meth)acrylat, Butyl(meth)acrylat, Glycidyl(meth)acrylat, 2-Hydroxyethyl(meth)acrylat, Cyclohexyl(meth)acrylat oder eine Kombination davon enthält.

8. Thermoplastische Harzzusammensetzung nach einem der Ansprüche 1 bis 7, wobei
das (C) N-Cyclohexyl-Maleimid-Alkyl(meth)acrylat-Copolymer eine Glasübergangstemperatur von 120 bis 140 °C und einen Brechungsindex von 1,480 bis 1,500 aufweist, wobei der Brechungsindex ein mit einem spektroskopischen Ellipsometer gemessener Wert ist.

9. Thermoplastische Harzzusammensetzung nach einem der Ansprüche 1 bis 8, wobei
das (C) N-Cyclohexyl-Maleimid-Alkyl(meth)acrylat-Copolymer ein gewichtsdurchschnittliches Molekulargewicht von 50.000 bis 300.000 g/mol aufweist, wobei das gewichtsdurchschnittliche Molekulargewicht durch Auflösen einer Pulverprobe in Tetrahydrofuran (THF) und anschließende Durchführung einer Gelpermeationschromatographie (GPC) gemessen wird.

10. Thermoplastische Harzzusammensetzung nach einem der Ansprüche 1 bis 9, wobei
(D) ein Copolymer aus Alkyl(meth)acrylat-aromatischer Vinylverbindung-Vinylcyanidverbindung ferner in einer Menge von mehr als 0 Gew.-% und weniger als oder gleich 10 Gew.-% enthalten ist.

11. Thermoplastische Harzzusammensetzung nach einem der Ansprüche 1 bis 10, wobei
mindestens ein Additiv, ausgewählt aus einem Flammschutzmittel, einem Keimbildner, einem Koppelmittel, einem Füllstoff, einem Weichmacher, einem Schmiermittel, einem antibakteriellen Mittel, einem Trennmittel, einem Wärmestabilisator, einem Antioxidans, einem Additiv für anorganische Materialien, einem ultravioletten (UV) Stabilisator, einem antistatischen Mittel, einem Pigment und einem Farbstoff, ebenfalls enthalten ist.

12. Formerzeugnis, das aus der thermoplastischen Harzzusammensetzung nach einem der Ansprüche 1 bis 11 hergestellt ist.

13. Formerzeugnis nach Anspruch 12, wobei das Formerzeugnis eine Izod-Kerbschlagzähigkeit einer 1/4 Zoll dicken Probe, gemessen nach ASTM D256, von mehr als oder gleich 3 kgf-cm/cm aufweist.

14. Formerzeugnis nach Anspruch 12 oder Anspruch 13, wobei
das Formerzeugnis eine gemäß ASTM D1525 gemessene Vicat-Erweichungstemperatur von mindestens 102 °C aufweist.

15. Formerzeugnis nach einem der Ansprüche 12 bis 14, wobei
das Formerzeugnis einen Helligkeitswert (L*) aufweist, der gemäß ASTM E308 in einem spekulären Komponentenausschlussverfahren (SCE) in Bezug auf ein schwarzes Formerzeugnis kleiner oder gleich 1 gemessen wird.

## Revendications

1. Composition de résine thermoplastique, comprenant
(A) 10 à 40% en poids d'un copolymère greffé à base d'acrylate qui comprend un noyau comprenant un polymère caoutchouteux à base d'acrylate, et une enveloppe formée par polymérisation par greffage d'un monomère sur le noyau, le monomère comprenant un (méth)acrylate d'alkyle, un composé vinylique aromatique, un composé cyanure de vinyle, ou une combinaison de ceux-ci ;
(B) 10 à 40% en poids d'une résine de (méth)acrylate de polyalkyle ; et
(C) 30 à 70% en poids d'un copolymère de N-cyclohexylmaléimide-(méth)acrylate d'alkyle.

2. Composition de résine thermoplastique de la revendication 1, dans laquelle
le polymère caoutchouteux à base d'acrylate a un diamètre de particule moyen allant de 100 à 400 nm, dans laquelle le diamètre de particule moyen se réfère à un diamètre de particule moyen en Z qui est mesuré en utilisant un analyseur de diffusion dynamique de lumière, et
le polymère caoutchouteux à base d'acrylate comprend un polymère réticulé d'acrylate d'alkyle comprenant l'acrylate de méthyle, l'acrylate d'éthyle, l'acrylate de butyle, l'acrylate de 2-éthylhexyle, l'acrylate d'hexyle ou une combinaison de ceux-ci, un copolymère réticulé de l'acrylate d'alkyle et d'un composé vinylique aromatique, un copolymère réticulé de l'acrylate d'alkyle et du composé silicone ou une combinaison de ceux-ci.

3. Composition de résine thermoplastique de la revendication 1 ou 2, dans laquelle
30 à 60% en poids du polymère caoutchouteux à base d'acrylate sont inclus par rapport à 100% en poids du copolymère greffé à base d'acrylate (A).

4. Composition de résine thermoplastique de l'une quelconque des revendications 1 à 3, dans laquelle
le noyau comprend un copolymère réticulé d'un acrylate d'alkyle-composé vinylique aromatique, et
l'enveloppe est formée par polymérisation par greffage d'un mélange de monomères comprenant un (méth)acrylate d'alkyle sur le noyau.

5. Composition de résine thermoplastique de l'une quelconque des revendications 1 à 4, dans laquelle
le noyau comprend un copolymère réticulé d'un acrylate d'alkyle-composé silicone, et
l'enveloppe est formée par polymérisation par greffage d'un mélange de monomères comprenant un composé vinylique aromatique et un composé cyanure de vinyle sur le noyau.

6. Composition de résine thermoplastique de la revendication 5, dans laquelle
l'enveloppe est un copolymère d'un mélange de monomères comprenant le composé vinylique aromatique et le composé cyanure de vinyle dans un rapport en poids allant de 6:4 à 8:2.

7. Composition de résine thermoplastique de l'une quelconque des revendications 1 à 6, dans laquelle
la résine de (méth)acrylate de polyalkyle (B) a un poids moléculaire moyen en poids allant de 50000 à 200000 g/mol, dans laquelle le poids moléculaire moyen en poids est mesuré en dissolvant un échantillon de poudre dans du tétrahydrofurane (THF), puis en effectuant une chromatographie par perméation sur gel (GPC), et
la résine de (méth)acrylate de polyalkyle (B) est un polymère d'un monomère comprenant le (méth)acrylate de méthyle, le (méth)acrylate d'éthyle, le (méth)acrylate de butyle, le (méth)acrylate de glycidyle, le (méth)acrylate de 2-hydroxyéthyle, le (méth)acrylate de cyclohexyle ou une combinaison de ceux-ci.

8. Composition de résine thermoplastique de l'une quelconque des revendications 1 à 7, dans laquelle
le copolymère de N-cyclohexylmaléimide-(méth)acrylate d'alkyle (C) a une température de transition vitreuse allant de 120 à 140°C et un indice de réfraction allant de 1,480 à 1,500, dans laquelle l'indice de réfraction est une valeur mesurée en utilisant un ellipsomètre spectroscopique.

9. Composition de résine thermoplastique de l'une quelconque des revendications 1 à 8, dans laquelle
le copolymère de N-cyclohexylmaléimide-(méth)acrylate d'alkyle (C) a un poids moléculaire moyen en poids allant de 50000 à 300000 g/mol, dans laquelle le poids moléculaire moyen en poids est mesuré en dissolvant un échantillon de poudre dans du tétrahydrofurane (THF), puis en effectuant une chromatographie par perméation sur gel (GPC).

10. Composition de résine thermoplastique de l'une quelconque des revendications 1 à 9, dans laquelle
(D) un copolymère de (méth)acrylate d'alkyle-composé vinylique aromatique-composé cyanure de vinyle est en outre inclus en une quantité supérieure à 0% en poids et inférieure ou égale à 10% en poids.

11. Composition de résine thermoplastique de l'une quelconque des revendications 1 à 10, dans laquelle
au moins un additif choisi parmi un ignifugeant, un agent de nucléation, un agent de couplage, une charge, un plastifiant, un lubrifiant, un agent antibactérien, un agent de démoulage, un stabilisant thermique, un antioxydant, un additif de matériau inorganique, un stabilisant ultraviolet (UV), un agent antistatique, un pigment et un colorant est en outre inclus.

12. Article moulé préparé à partir de la composition de résine thermoplastique de l'une quelconque des revendications 1 à 11.

13. Article moulé de la revendication 12, dans lequel l'article moulé a une résistance au choc Izod sur barreau entaillé d'un spécimen de 1/4 pouce d'épaisseur mesurée selon la norme ASTM D256 supérieure ou égale à 3 kgfcm/cm.

14. Article moulé de la revendication 12 ou 13, dans lequel
l'article moulé a une température de ramollissement Vicat mesurée selon la norme ASTM D1525 supérieure ou égale à 102°C.

15. Article moulé de l'une quelconque des revendications 12 à 14, dans lequel
l'article moulé a une valeur de clarté (L*), mesurée selon la norme ASTM E308 dans une méthode à composante spéculaire exclue (SCE), par rapport à un article moulé noir inférieure ou égale à 1.
